## Europäisches Patentamt
## European Patent Office
## Office européen des brevets

(19) 

(11) Numéro de publication: **0 169 158**
**B1**

(12) # FASCICULE DE BREVET EUROPÉEN

(45) Date de publication du fascicule du brevet:
10.08.88

(51) Int. Cl.⁴: **A 23 B 5/00**

(21) Numéro de dépôt: **85460010.3**

(22) Date de dépôt: **06.06.85**

(54) **Procédé de conservation d'oeufs cuits durs et écalés.**

(30) Priorité: **13.06.84 FR 8409461**

(43) Date de publication de la demande:
**22.01.86 Bulletin 86/4**

(45) Mention de la délivrance du brevet:
**10.08.88 Bulletin 88/32**

(84) Etats contractants désignés:
**AT BE CH DE GB IT LI LU NL SE**

(56) Documents cité:
**EP-A-0 006 067**
**EP-A-0 020 011**
**WO-A-81/00192**
**BE-A-372 560**
**FR-A-1 276 726**
**IT-A-383 599**
**US-A-3 216 828**
**US-A-3 273 258**
**US-A-3 843 813**

**PATENTS ABSTRACTS OF JAPAN, vol. 8, no. 98 (C-221) 1535 , 9 mai 1984**
**PATENTS ABSTRACTS OF JAPAN, vol. 8, no. 145 (C-232) 1582 , 6 juillet 1984**
**PATENTS ABSTRACTS OF JAPAN, vol. 6, no. 7 (C-87) 885 , 16 janvier 1982**

(73) Titulaire: **Etablissements Rebours S.A., 2, rue au Prévôt, F-35410 Chateaugiron (FR)**

(72) Inventeur: **Durosset, Pierre, 18, rue Jules Vallès, F-29000 Quimper (FR)**
Inventeur: **Pinel, Michel, 5, rue Edgar Quinet, F-29000 Quimper (FR)**

(74) Mandataire: **Martin, Jean- Jacques, Cabinet REGIMBEAU Corre, Martin, Schrimpf, Warcoin, Ahner 11, rue Franz Heller, F-35700 Rennes (FR)**

## Description

L'invention concerne un procédé de conservation d'oeufs cuits durs et écalés.

Un des principaux freins au développement de la commercialisation des oeufs durs écalés est dû aux problèmes qui apparaissent rapidement au cours de leur conservation.

On constate, en effet, l'apparition:

- d'un liséré noir à la périphérie du jaune de l'oeuf;
- d'une altération microbiologique due aux contaminations survenant après l'écalage et lors du conditionnement;
- d'une odeur désagréable d'hydrogène sulfuré;
- d'un exsudat qui porte préjudice à la conservation et à l'aspect.

L'expérience montre que la conservation des oeufs cuits durs écalés n'ayant subit aucun traitement particulier est de 3 à 5 jours à une température moyenne de + 3°C.

Un certain nombre de procédés sont actuellement connus pour améliorer la durée et la qualité de la conservation. On peut notamment citer la conservation sous vide ou en saumure acidifiée, ainsi que la conservation sous atmosphère enrichie en $CO_2$. Pour tous ces procédés la durée de vie de la conservation n'excède pas 5 à 21 jours.

Dans le document EP-A-6067, il est proposé un procédé de conservation selon lequel, après cuisson et écalage des oeufs, on introduit ceux-ci dans une enveloppe plastique étanche dans laquelle on a préalablement fait le vide, puis on insuffle dans l'enveloppe un gaz riche en $CO_2$. Si ce procédé permet en principe d'améliorer la durée de conservation (de trois a cinq semaines), il présente l'inconvénient d'une mise en oeuvre délicate et coûteuse.

Un autre procédé consiste à effectuer le conditionnement des oeufs dans une solution de conservation qui porte la durée de conservation à au moins 6 semaines.

Malheureusement, dans ce dernier procédé, on met en oeuvre un liquide conservateur nécessitant l'adjonction d'agents de conservation qui, d'une part, ne sont pas autorisés selon certaines législations nationales et qui, de toute façon, risquent de déplaire au consommateur. Enfin, un tel procédé pose un problème pratique de poids, de volume et d'emballage adapté.

C'est ainsi, par exemple, qu'il est proposé dans le document JP-A-56 131 338 de conditionner les oeufs cuits et écalés dans un agent de conservation consistant en un gel d'agar.

On notera enfin qu'il est connu de sécher et de stériliser des oeufs non écalés, préalablement lavés, en exposant leur coquille a un rayonnement infrarouge de longueur d'onde comprise entre 5 et 50 micrometres. Un tel procédé, qui est décrit dans le document JP-A-5 914 746 ne s'applique toutefois pas a la conservation d'oeufs durs et écalés.

L'invention a pour but de pallier ces inconvénients et concerne un procédé de conservation longue durée d'oeufs durs écalés caractérisé en ce qu'ils sont d'abord séchés en surface puis conditionnés dans leur emballage de vente er soumis à un traitement thermique par rayonnement infrarouge.

L'invention sera mieux comprise à l'aide des explications qui vont suivre.

Le procédé conforme à l'invention comporte une succession d'étapes conduisant, après la cuisson et l'écalage, au séchage du produit et à son conditionnement, suivi d'un traitement thermique et d'un refroidissement.

Selon une caractéristique importante de l'invention, ce traitement thermique est réalisé au moyen d'un rayonnement infrarouge appliqué à l'oeuf déjà conditionné.

Ces différentes étapes sont reprises ci-dessous et illustrées au moyen d'un exemple pratique nullement limitatif:

Des oeufs de calibre 50 - 55 g, de fraicheur supérieeure à 3 jours sont, de manière connue, cuits à l'eau bouillante, refroidis et écalés soit à la machine, soit manuellement. Ils sont ensuite, conformément à l'invention, séchés en surface par passage dans une cellule ventilée pendant quelques minutes (par exemple 5 minutes) à une température de l'ordre de 60 à 80°C. Cette opération permet d'améliorer la durée de conservation en réduisant l'humidité et en formant une fine pellicule à la surface de l'oeuf. Elle diminue ainsi les risques de formation ultérieure d'exsudat dans l'emballage.

Après séchage en surface, les oeufs sont conditionnés en emballage imperméable à la vapeur d'eau, partiellement perméable au gaz et, selon une caractéristique importante de l'invention, transparent au rayonnement infrarouge d'une longueur d'onde déterminée. Cet emballage est, par exemple, constitué par des sachets souples en polyamide-polpropylène d'une épaisseur de 90 micromètres.

Les oeufs ainsi conditionnés se présentent de préférence sur une seule couche de telle sorte que le traitement thermique s'applique aussi régulièrement que possible sur toute la surface de chacun des oeufs traites. Ils sont pris en charge dans un four ou tunnel à rayonnement infrarouge dit "cour", dont la longueur d'onde est comprise entre 0,8 et 3 micromètres.

L'expérience a montré que la longueur d'onde optimale pour ce traitement thermique était de 1,3 micromètre environ. En pratique, il n'est pas possible d'obtenir un rayonnement de longueur d'onde unique, si bien qu'on utilise un rayonnement dont le spectre est centre (à 90 % environ) sur cette valeur, le reste (10 %) des longueurs d'onde se répartissant dans l'intervalle précité (0,8 à 3 micromètres).

La puissance mise en jeu est de l'ordre de 20 kW, et la durée totale du traitement de l'ordre de 11 minutes; durant les 5 premières minutes, la température de la surface des oeufs s'élève à une température égale ou légèrement supérieure à 70°C, température de surface qui est ensuite maintenue sensiblement constante pendant les six minutes de traitement thermique qui restent.

Cette température de 70°C (ou plus) doit, en effet, être atteinte assez vite et maintenue constante pendant un temps suffisant pour détruire la quasi totalité de la flore microbienne, mais suffisamment court pour que le coeur de l'oeuf ne soit pas atteint, et ne subisse donc pas une surcuisson. Les puissances mises en jeu et les durées de traitement sont optimisées en fonction du calibrage des oeufs concernés.

A la sortie du traitement thermique, les oeufs conditionnés et pasteurisés sont refroidis en chambre froide ventilée à + 3°C et conservés dans ces conditions. La durée de conservation atteint alors facilement les quatre semaines, voire même les six semaines, sans que soient constatés les défauts énoncés au début (noircissement, odeur, etc...).

Des tests ont été pratiqués par la demanderesse et ont conduit aux resultats suivants après quatre semaines de conservation:
- coliformes et coliformes fécaux : absence / 1g,
- staphylocoqes : absence / 1g,
- anaérobies sulfito-réducteurs : absence / 1g,
- salmonelles : absence / 1g,
- flore aérobie mésophile : 300 000 / g.

Ces résultats sont évidemment obtenus à condition que soient respectes les conditions d'hygiène réglementaires. Le produit a conservé toutes ses qualités gustatives; l'exsudat, s'il se produit, est limpide et, en tout état de cause, est inférieur à 3 % du poids initial de l'oeuf traité.

Le procédé conforme à l'invention, dont un exemple de réalisation a été développé ci-dessus, consiste donc à sécher en surface les oeufs cuits durs et écalés et ensuite à les pasteuriser après qu'ils aient été déjà conditionnés dans leur emballage de vente, cette pasteurisation étant obtenue, selon une caractéristique importante de l'invention, au moyen d'un traitement par rayonnement infrarouge. La majeure partie de la flore de contamination de surface apportée au cours de l'écalage et du conditionnement est ainsi détruite.

La mise en oeuvre d'un rayonnement infrarouge permet d'obtenir une pasteurisation efficace mais très rapide, ce qui a pour effet d'éviter tous risques de surcuisson de l'oeuf. Le fait de prévoir une étape de séchage préalablement au traitement thermique améliore sensiblele résultat, car elle contribue à ralentir le développement des micro-organismes et comme, selon une caractéristique importante de l'invention, le traitement thermique est effectué sur un oeuf déjà en place dans son emballage, la recontamination ultérieure est inexistante.

Un tel procédé trouve son application pour la préparation d'oeufs durs écalés destinés à la commercialisation de ce produit, notamment destiné à la restauration collective, mais également à la consommation ménagère.

## Revendications

1. Procédé de conservation d'oeufs cuits durs et écalés, caractérisé en ce qu'après la cuisson et l'écalage, les oeufs sont soumis à une étape de séchage de surface dans un tunnel ventilé à l'air chaud, de préférence à une température de l'ordre de 60° à 80°C pendant quelques minutes, qu'ils sont ensuite conditionnes dans leur emballage de vente, puis qu'ils sont soumis à un traitement thermique par exposition à un rayonnement infrarouge.

2. Procédé selon la revendication 1, caractérisé en ce que la longueur d'onde du rayonnement infrarouge est comprise entre 0,8 et 3 micromètres, le spectre de ce rayonnement étant centré de préférence sur 1,3 micromètre.

3. Procédé selon l'une des revendications 1 ou 2, caractérisé en ce qu'apres le traitement thermique les oeufs subissent une étape de refroidissement rapide.

4. Procédé selon l'une des revendications 1 à 3, caractérisé en ce que les oeufs sont conditionnés dans un emballage qui est réalisé dans un matériau imperméable à la vapeur d'eau, partiellement perméable aux gaz et transparent aux rayonnements infrarouges.

5. Procédé selon l'une des revendications 1 à 4, caractérisé en ce que la durée du traitement thermique est calculée de telle sorte que, dans un premier temps, la température de la surface de l'oeuf s'élève rapidement aux environs de 70°C, puis qu'elle se maintienne à cette température pendant une durée suffisante pour que la totalité de la flore microbienne soit détruite, sans risque de surcuisson de l'oeuf.

## Patentansprüche

1. Konservierungsverfahren für hartgekochte und entschalte Eier, dadurch gekennzeichnet, daß die Eier nach dem Kochen und Entschalen einem Oberflächentrocknungsschritt in einem mit Warmluft, vorzugsweise bei einer Temperatur der Größenordnung von 60° bis 80°C, belüfteten Tunnel während einiger Minuten ausgesetzt werden, daß sie daraufhin in ihre Verkaufsverpackung eingepackt werden, woraufhin sie einer Wärmebehandlung durch Bestrahlen mit Infrarotstrahlung ausgesetzt werden.

2. Verfahren nach Anspruch 1, dadurch gekennzeichnet, daß die Wellenlänge der Infrarotstrahlung zwischen 0,8 und 3 µm liegt, wobei das Spektrum dieser Strahlung vorzugsweise bei 1,3 µm zentriert ist.

3. Verfahren nach einem der Ansprüche 1 oder 2, dadurch gekennzeichnet, daß die Eier nach der Wärmebehandlung einen Schnellkühlungsschritt erfahren.

4. Verfahren nach einem der Ansprüche 1 bis 3, dadurch gekennzeichnet, daß die Eier in einer Verpackung verpackt werden, die aus einem für Wasserdampf undurchlässigen, für Gas teilweise durchlässigen und für Infrarotstrahlung durchlässigen Material hergestellt ist.

5. Verfahren nach einem der Ansprüche 1 bis 4, dadurch gekennzeichnet, daß die Dauer der Wärmebehandlung derart berechnet wird, daß sich zu einer ersten Zeit die Oberflächentemperatur des Ei's schnell auf ungefähr 70°C erhöht, sich diese dann bei dieser Temperatur während einer ausreichenden Dauer hält, damit die gesamte mikrobische Flora ohne die Gefahr einer Überhärtung des Ei's zerstört wird.

**Claims**

1. Method for preserving peeled hard-boiled eggs, characterised in that after cooking and peeling, the eggs undergo a surface drying stage in a hot air ventilated tunnel, preferably at a temperature of around 60° to 80°C for a few minutes, in that they are then packed in their selling package, then they undergo heat treatment by being exposed to infrared radiation.

2. Method according to claim 1, characterized in that the wavelength of the infrared radiation lies between 0.8 and 3 micrometers, the spectrum of this radiation being centred around 1.3 micrometers.

3. Method according to one of claims 1 or 2, characterized in that after the heat treatment, the eggs undergo a stage of rapid re-cooling.

4. Method according to one of claims 1 to 3, characterized in that the eggs are conditioned in a package made of a material impervious to water vapour, partially permeable to gas and transparent to infrared radiation.

5. Method according to one of claims 1 to 4, characterized in that the duration of heat treatment is calculated in such a way that initially, the surface temperature of the egg rises quickly to around 70°C, then it remains at this temperature for a long enough time, so that all of the microbial organisms are destroyed without there being any risk of over-cooking the egg.